# EUROPEAN PATENT SPECIFICATION

(11) **EP 1 268 322 B1**
(45) Date of publication and mention of the grant of the patent: **28.03.2007**
(21) Application number: 01942349.0
(22) Date of filing: 05.01.2001
(51) Int. Cl.: B65G 1/04, B65G 1/06

(54) **DEVICE AND AUTOMATIC STORING ARRANGEMENT FOR HANDLING GOODS-CARRYING ELEMENTS**
VORRICHTUNG UND AUTOMATISCHE LAGEREINRICHTUNG ZUM HANDHABEN VON WARENTRÄGERN
DISPOSITIF ET MECANISME DE STOCKAGE AUTOMATIQUE POUR LA MANUTENTION DE SUPPORTS D'ARTICLES

(30) Priority: 12.01.2000 SE 0000098
(43) Date of publication of application: 02.01.2003
(73) Proprietor: MOVING AB, 265 82 Astorp (SE)
(72) Inventor: BERG, Ulf, S-461 91 Trollhättan (SE); TURESSON, Per, S-465 95 Grästorp (SE)
(74) Representative: Thylén, Eva Matilda
(86) International application number: PCT/SE2001/000012
(87) International publication number: WO 2001/051388

(56) References cited:
- DE-A1- 3 407 099
- SE-B- 353 695
- SE-C2- 511 415
- US-A- 3 883 008
- US-A- 4 690 602

## Description

### Technical Field

The present invention relates to a device and an automatic storing arrangement for handling goods-supporting elements. More specifically, the invention relates to such a device comprising a carrier means which is movable along a first horizontal axis and has a first transport means for delivering goods-supporting elements arranged on the carrier means and for fetching goods-supporting elements located adjacent to the carrier means, by engaging the sides of the elements. The invention also relates to an automatic storing arrangement with a corresponding carrier means.

### Background Art

Automatic storing arrangements are used for handling goods-supporting elements, such as pallets or trays. Such an automatic storing arrangement may comprise one or more shelf sections with storage shelves as well as a carriage with a carrier means. The carriage and the carrier means are displaceable so that the carrier means can be moved to each of the different shelves. The carrier means comprises in turn a transport means for delivering and fetching goods-supporting elements from the carrier means to the shelves and, respectively, from the shelves to the carrier means. The carrier means is thus movable to and into the various storage shelves, on which the goods-supporting elements are delivered and from which they are fetched with the aid of the transport means. The automatic storing arrangement is normally controlled by a computer, which records on which storage shelf each goods-supporting elements is stored, whereby the goods-supporting elements can be fetched from the storage shelf in an optional order.

The storage shelves normally comprise sectional elements which form supporting surfaces for side portions of the undersides of the elements.

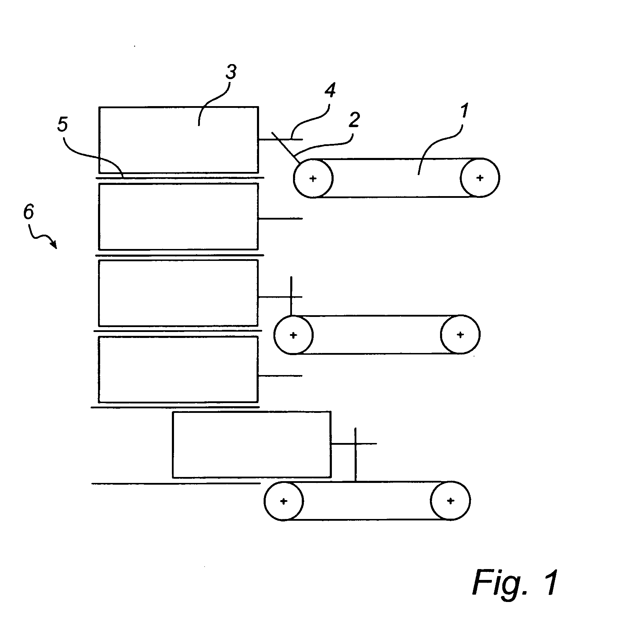

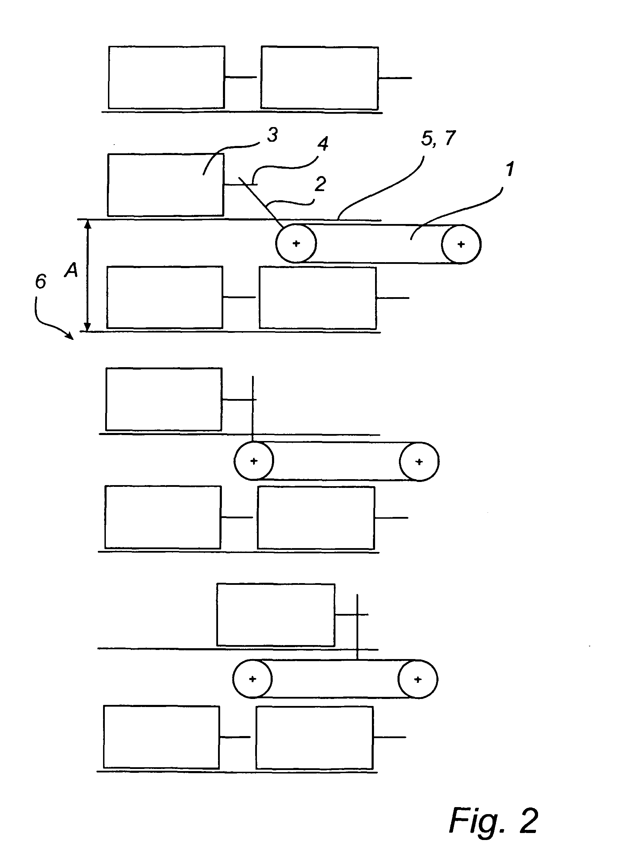

One type of carrier means comprises a transport means which is adapted to engage the sides of the elements. Figs 1 and 2 illustrate the sequence of fetching an element with the aid of such a carrier means 1 from a shelf section 6, which accommodates one or two elements 3 in depth. The transport means of the carrier means 1 usually comprises one or more pins 2 movable in two opposite directions and cooperating with a handle 4 mounted on the side of the element 3. To deliver an element 3 from the carrier means 1 to a storage shelf 5, the pin 2 is moved so as to engage the side of the element 3, or the handle 4 mounted on said side, and thereby presses in the element 3 on the shelf 5 in question. To fetch an element 3 from a storage shelf 5, the carrier means 1 is moved to a position adjacent to the element 3, after which the pin 2 is moved into engagement with the handle 4.

To carry out this engagement with the handle 4 in connection with the fetching of a goods-supporting element 3, the carrier means 1 must be arranged at a level slightly below the element 3.

In the case where each storage shelf 5 accommodates one element 3 only, as shown in Fig. 1, this is normally not a problem since the handle 4 can be allowed to protrude from the storage shelves 5, whereby the carrier means 1 can use the free space in front of the shelf section 6. As a result, it will be possible to make the self section 6 compact, and the distance between two elements 3, which are arranged on two vertically adjoining shelves 5, is minimised.

In the case where each storage shelf 5 accommodates several elements 3 in depth, for instance two elements 3 as shown in Fig. 2, it is, however, necessary - for fetching an element 3 located on the shelf 5 - for the carrier means 1 to be inserted into the shelf section 6 at a level below the element 3 and for access to the element 3 in question to be allowed from this lower level. The shelf section 6 shown in Fig. 2 thus has shelves 5 which are formed of supporting sectional elements 7. The side portions of the undersides of the element 3 will thus rest on these supporting sectional elements 7. Consequently an opening is formed between the supporting sectional elements 7. Moreover, the supporting sectional elements 7 are arranged at such a distance A from each other in the vertical direction as to form a free space between two elements 3 which are arranged on two shelves 5 adjoining in the vertical direction. The vertical extent of this free space is not allowed to be less than the height dimension of the carrier means 1. The carrier means can consequently be moved to a position slightly below and adjacent to an element 3 by moving the carrier means 1 into the free space of a subjacent shelf 5, whereby the opening between the supporting sectional elements 7 allows the pin 2 of the carrier means 1 to reach the element 3 in question. Owing to the free space, formed of said distance A, between the element 3 located on the subjacent shelf 5 and the element 3 located on the superjacent shelf 5, insertion of the carrier means 1 into the subjacent shelf 5 is allowed, whether elements 3 are arranged on the same or not. Since the elements 3 must be separated in the vertical direction, the shelf section 6 will, of course, be unnecessarily bulky, which results in poor utilisation of space.

A similar design, which basically suffers from the problems above, is disclosed in SE-C2-511 415.

### Summary of the Invention

In view of that stated above, a first object of the present invention is to provide an improved device of the type described by way of introduction for handling goods-supporting elements. The device should allow handling of goods-supporting elements which are arranged in depth on shelves of a compact shelf section.

A second object of the present invention is to provide an improved automatic storing arrangement of the type described by way of introduction. The automatic storing arrangement should allow use of a compact shelf section for storing goods-supporting elements in depth.

The above expression "compact shelf section" relates to a shelf section with storage shelves where the free space between two goods-supporting elements, which are arranged on two vertically adjoining shelves, is minimised.

According to the present invention, the first object is achieved by a device having the features stated in claim 1. Preferred embodiments of the device are evident from claims 2-8.

According to the present invention, the second object is achieved by an automatic storing arrangement having the features stated in claim 9.

Thus, according to the present invention, a device is provided for handling goods-supporting elements, comprising a carrier means which is movable along a first horizontal axis and has a first transport means for delivering goods-supporting elements arranged on the carrier means and for fetching goods-supporting elements located adjacent to the carrier means, by engaging the sides of the elements, said device being characterised in that the first transport means comprises a gripping means, which is movable to a position for engaging a side, facing the carrier means, of an element adjoining the carrier means when the carrier means is aligned with said element and is moveable into the shelf towards the element arranged on the shelf, said engagement allowing displacement of the element by moving the carrier means along said horizontal axis away from the element, wherein the gripping means during said engagement is adapted to act to hook on to a catching means on a side of the element, wherein the first transport means comprises an endless driving line, which carries the gripping means and passes over two parallel drive wheels which are rotatably arranged at opposite side edges of the carrier means, wherein gripping means is in the form of a two-way hook comprising a first part extending perpendicular from the driving line, and a second part, which is connected to the outer end of the first part and is arranged parallel with the driving line, said second part being pivotable into engagement with said side of the element by moving the gripping means over one of said drive wheels, and wherein the second part has a central portion, via which the second part is connected to the outer end of the first part for forming projecting engaging portions on both sides of the central portion.

This results in a device which is capable of handling goods-supporting elements which are stored in depth on shelves of a compact shelf section. More specifically, this is achieved with the aid of the gripping means, which, when the carrier means is arranged on a level with and adjacent to an element, is movable to a position for engaging the side of the element facing the carrier means. In order to fetch an element on a shelf, the carrier means of the device is thus simply moved into the shelf in question to a position adjoining the element, after which the gripping means is moved to the position for engaging the side of the element. Subsequently, the carrier means is moved out of the shelf, whereby the element, owing to the engagement of the gripping means with the side of the element, is entrained from the shelf. This makes it possible to store goods-supporting elements in depth on shelves which, when a goods-supporting element is stored on the shelf, do not define a free space between that element and elements stored on shelves above that element.

Furthermore, according to the inventive device, the gripping means acts during said engagement to hook on to the side of the element. This results in a reliable engagement with the element which allows safe pulling-out of the element from the shelf in connection with the fetching of the element. The gripping means acts to hook on to a catching means on the side of the element, the catching means preferably being in the form of a projection on said side. The projection ensures that the gripping means has good access to the side of the element in connection with its engaging the side of the element.

This allows engagement by hooking on to a side of an element, independently of in which direction the gripping means is passed over the drive wheels. The first part and the second part are preferably formed in one piece.

The gripping means is preferably displaceable in two opposite directions, which are parallel with said first horizontal direction. This makes it possible to pull up on the carrier means an element which has hooked on to the gripping means.

The carrier means is advantageously vertically movable along a vertical axis. Moreover, the device is advantageously movable along a second horizontal axis extending perpendicular to the first horizontal axis. This makes it easy to move the carrier means of the inventive device to the various shelves of a shelf section.

According to one more preferred embodiment of the device, the gripping means extends in said position for engaging an element from a side edge of the carrier means, parallel with said first horizontal axis.

According to another embodiment of the invention, the device comprises a second transport means, which is adapted to engage the underside of the goods-supporting elements, the first transport means and the second transport means being drivable independently of each other. Moreover, according to the present invention, an automatic storing arrangement for handling goods-supporting elements is provided, comprising a shelf section, a device of the kind described above, wherein the carrier means being supported by a carriage, and wherein the carriage and the carrier means being arranged in such manner that the carrier means is movable to and into shelves of the shelf section.

As a result, an automatic storing arrangement is provided, which allows handling of goods-supporting elements, which are stored in depth on shelves of a compact shelf section. Thus, the free space of the shelf section is minimised, which results in satisfactory utilisation of space.

### Brief Description of the Drawings

Fig. 1 is a schematic view of a sequence of fetching a goods-supporting element from a shelf section of a conventional automatic storing arrangement, said shelf section being intended for storage of only one goods-supporting element in depth.
Fig. 2 is schematic view of a sequence of fetching a goods-supporting element from a shelf section of a conventional automatic storing arrangement, said shelf section being intended for storage of two goods-supporting elements in depth.
Fig. 3 is a schematic perspective view of a preferred embodiment of the carrier means of an inventive device for handling goods-supporting elements.
Fig. 4 is a schematic side view of the carrier means illustrated in Fig. 3.
Figs 5a-h illustrate schematically the sequence of fetching a goods-supporting element from a storage shelf of an inventive automatic storing arrangement.
Figs 6a-c illustrate schematically the sequence of disengaging a transport means of the carrier means of an inventive automatic storing arrangement from a projection of a goods-supporting element arranged on the carrier means.
Figs 7a-c illustrate schematically the sequence of delivering one of two goods-supporting elements arranged on the carrier means of an inventive automatic storing arrangement.
Figs 8a-d illustrate schematically the sequence of delivering a goods-supporting element arranged on the carrier means of an inventive automatic storing arrangement.

### Description of Embodiments

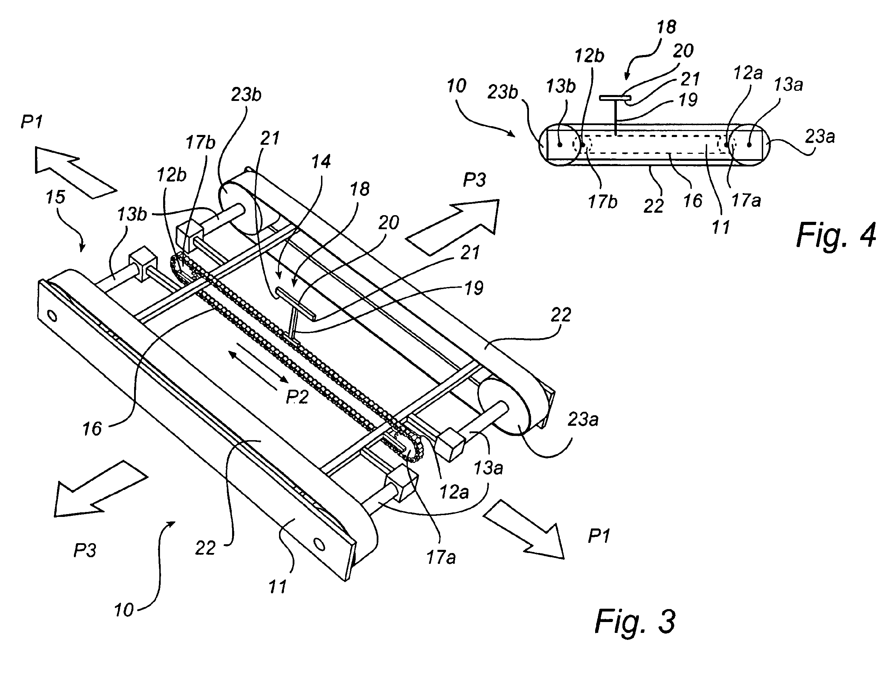

Reference is made to Figs 3 and 4, which schematically illustrate a preferred embodiment of a carrier means 10 for a device for handling goods-supporting elements. Such a device may be included in, for instance, an automatic storing arrangement of the type described by way of introduction. Some components, which are not essential to the present invention, have been omitted to make the figure more distinct.

The carrier means 10 comprises a frame 11 which at each end carries a first shaft 12a, 12b and second shafts 13a, 13b as well as a first transport means 14 and a second transport means 15. The frame 11 can, of course, also comprise a fixing element (not shown) for fixing the carrier means 10 to a structure (not shown) of a carriage, the carrier means 10 advantageously being so connected to said structure that it is vertically and laterally movable in the directions indicated by arrows P1.

The carrier means 10 is adapted to carry goods-supporting elements (not shown), such as pallets and trays, while handling the same. The first transport means 14 and the second transport means 15 are adapted to deliver and fetch the elements, the first transport means 14 being adapted to engage the sides of the goods-supporting elements while the second transport means 15 is adapted to engage the undersides of the goods-supporting elements.

In the embodiment shown, the first transport means 14 is formed of an endless chain 16 which passes over a sprocket 17a, 17b of the respective first shafts 12a, 12b. A gripping means 18 in the form of a hook 18 arranged on the chain 16 projects from the carrier means 10. The hook 18 is formed in one piece and comprises a first part 19 which is arranged perpendicular to the chain 16, and a second part 20 which connects to the first part 19 and is arranged parallel with the extent of the chain 16. The second part 20 connects to the first part 19 in such manner that an engaging portion 21 is formed on both sides of the first part 19. Thus the hook 18 is a two-way hook and can be made to hook on to a suitably designed catching means, such as a projection or a recess, arranged on a side, facing the carrier means 10, of an element located adjacent to the carrier means 10 by moving the hook 18 in an optional direction over one of the sprockets 17a, 17b. Between the shafts 13a, 13b there is a space which allows movement of the hook 18 over the respective sprockets 17a, 17b. However, it will be appreciated that the arrangement of shafts at each end of the carrier means 10 can be designed in a different fashion. For instance, it is possible to arrange the shafts 12a and 13a along a first common axis and the shafts 12b and 13b along a second common axis.

The second transport means 15 is in the embodiment illustrated formed of two endless drive belts 22, which are arranged in parallel on one side each of the first transport means 14 and which pass over a drive roller 23a, 23b each on the respective second shafts 13a, 13b. Of course, the carrier means 10 may comprise a suitable supporting structure (not shown) for the drive belts 22, whereby a goods-supporting element can be arranged on the carrier means 10 and be supported by the drive belts 22 by means of said supporting structure.

The first transport means 14 and the second transport means 15 are drivable by means of drive motors (not shown) independently of each other in the directions indicated by arrows P2.

The second transport means 15 is thus designed in such manner that a goods-supporting element arranged on the carrier means 10 is supported by the drive belts 22. The goods-supporting element does not make contact with the chains 16 of the first transport means 15 while the gripping means 18 can be made to engage a side of the same element by moving the gripping means 18 towards the element.

A goods-supporting element arranged on the carrier means 10 can thus be handled by the first transport means 14 by moving the gripping means 18 for engaging one of the sides of the element, or by the second transport means 15 by driving the drive belts 22 which engage the underside of the element.

It will be appreciated that the first drive means may comprise a plurality of parallel chains with associated gripping means.

The carrier means 10 illustrated in Figs 3 and 4 is included as a component of a device for handling goods-supporting elements. This device may comprise a carriage, on which the carrier means is arranged so as to be vertically and laterally movable. The carriage may in turn be movable in the directions indicated by arrows P3. The inventive device can consequently be included in an automatic storing arrangement with storage shelves, the carrier means 10 being movable to and into the various shelves.

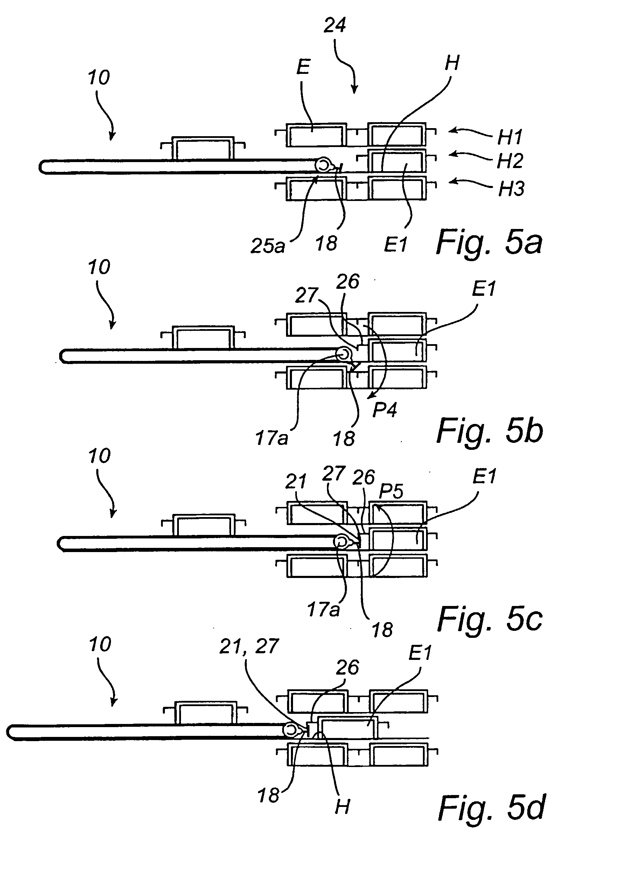

Figs 5a-h, to which reference is now made, schematically illustrate a sequence of fetching a goods-supporting element E1 from a shelf H of an automatic storing arrangement. The shelf H is included in a shelf section 24 which comprises three compartments H1, H2, H3, and it will be appreciated that the invention is not limited to the shown number of compartments H1, H2, H3. The shelf section 24 may thus comprise a considerably greater number of compartments. Each compartment may, of course, comprise a large number of shelves in the lateral direction.

The automatic storing arrangement comprises an inventive device for handling goods-supporting elements E. The carrier means 10 of the device is thus movable in the longitudinal direction thereof to and into different shelves of each compartment H1, H2, H3.

Fig. 5a shows how the carrier means is moved into the shelf H of the compartment H2 towards the element E1 arranged on the shelf H. The gripping means 18 of the carrier means 10 is moved to an end position at a side edge 25 of the carrier means 10, in which end position the gripping means 18 is oriented essentially in the longitudinal direction of the carrier means 10. As is evident from the figures, the compartments H1, H2, H3 accommodate two elements E in depth. Moreover the shelf section 24 is so compact that the carrier means 10 cannot be moved in the direction of the element E at a level below the same. For fetching the element E1, the carrier means 10 is consequently arranged on essentially the same level as the element E1.

When the carrier means 10 has been moved to a position adjacent to the element E1, see Fig. 5b, the gripping means 18 is moved slightly over the sprocket 17a facing the element E1, whereby the gripping means 18 is pivoted in the direction indicated by arrow P4, thus being directed obliquely downwards. This prevents the gripping means 18 from hitting a projection 26 which is arranged on the side of the element E1 facing the carrier means and which is formed as a handle 26 with a gripping portion 27.

When the carrier means 10 has been moved further in the direction of the element E1, as shown in Fig. 5c, the gripping means 18 is moved in the opposite direction over the sprocket 17a. The gripping means 18 will be pivoted back in the direction indicated by arrow P5, whereby one of the engaging portions 21 of the gripping means 18 is inserted into the handle 26 and partly encompasses the gripping portion 27 thereof.

Subsequently, the carrier means 10 is moved out of the shelf H, which is shown in Fig. 5d, whereby the gripping means 18 will engage the handle 26. More specifically, one engaging portion 21 of the hook 18 will hook on to the gripping portion 27 of the handle 26 and pull out the element E1 from the shelf H while the carrier means 10 is moved out of the shelf H.

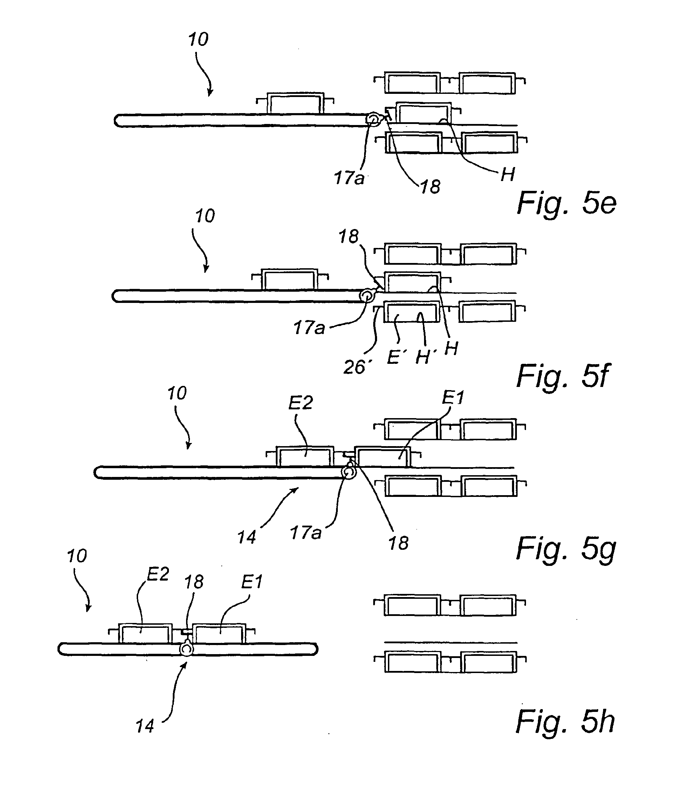

Figs 5e and 5f show how the carrier means 10, when leaving the shelf H, is lowered while the gripping means 10 is moved over the sprocket 17a to ensure that the engagement with the handle 26 is retained. While lowering the carrier means 10, it is ensured that it does not hit the handle 26' of an element E' arranged on a subjacent shelf H'.

In Figs 5g and 5h, the carrier means 10 has been lowered to a level, at which the element E1 can be pulled up on the carrier means 10. At the same time the gripping means 18, as shown in 5g, has been moved over the sprocket 17a to such an extent as to project perpendicular from the plane of extension of the carrier means 10. Consequently the element E1 can be pulled up on the carrier means 10 by driving of the first drive means 14, whereby the gripping means 18 will entrain the element E1 on to the carrier means 10. As is evident from the figures, a second element E2 is arranged on the carrier means 10. The second element E2 will, at the same time as the first element E1 is pulled up on the carrier means 10, be pushed forwards in the fetching direction of the first element E1.

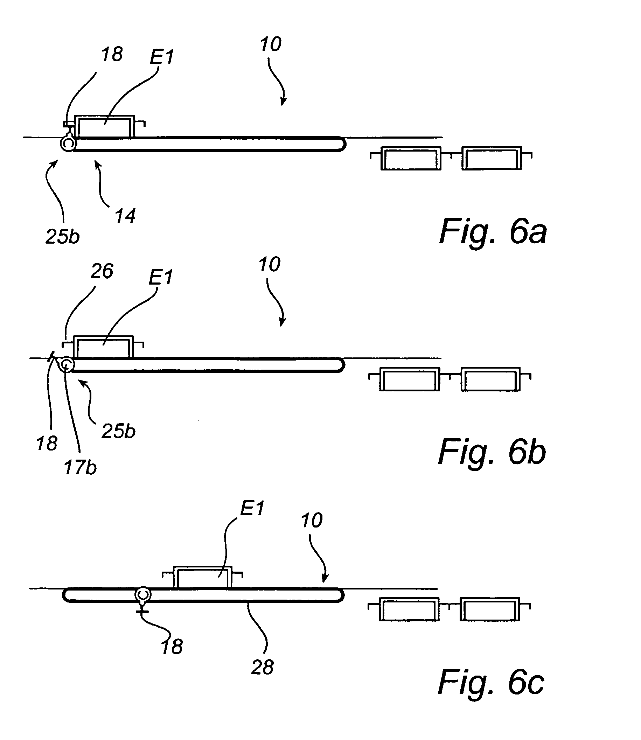

Figs 6a-c show how the gripping means 18 is disengaged from an element E1 pulled up on the carrier means 1. The gripping means 18 is simply moved to a side edge 25b of the carrier means 10 by driving of the first transport means 14. The element E1 will be pulled along to said side edge 25b. When the gripping means 18 is then moved over the sprocket 17b arranged at the side edge 25b, the gripping means 18, i.e. the hook 18, will be disengaged from the handle 26. The driving of the first transport means 14 may continue until the hook 18 is arranged on the underside 28 of the carrier means 10. Subsequently the element E1 can be returned to an optional position on the carrier means 10 by driving of the second transport means 15, which thus engages the underside of the element E1.

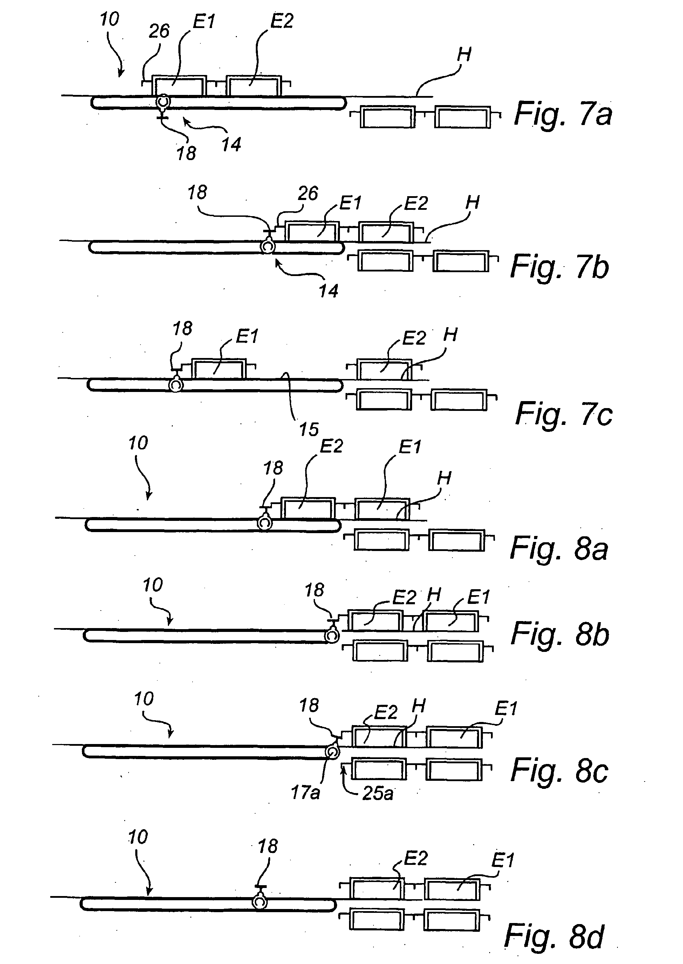

Figs 7a-c show how one E2 of two elements E1, E2 arranged on the carrier means 10 is delivered on a shelf H. The carrier means 10 is moved to a position adjacent to the shelf H in question. The first transport means 14 is then driven so that the gripping means 18 engages the handle 26 of a first one of the elements E1. By continued driving of said transport means 14, the second element E2 will be pushed into the shelf H by the first element E1. The first element E1 can then be returned to an optional position on the carrier means 10 with the aid of the second transport means 15. Also the gripping means 18 is moved to allow said displacement.

Figs 8a-d show how an element E2 arranged on the carrier means 10 is delivered on a shelf H. As is evident from the figures, an element E1 is already arranged on the shelf H in question. The carrier means 10 is moved to a position adjacent to and on a level with the shelf H. The element E2 will then be pushed into the shelf H with the aid of the gripping means 18. The element E1 which is already located on the shelf H will be pushed further into the shelf H by the second element E2. As is evident from Fig. 8c, it is ensured that the element E2 is pushed sufficiently far into the shelf H by the gripping means 18 being moved over the sprocket 17a at the side edge 25a of the carrier means 10 facing the shelf H.

Thus, the invention comprises a device as well as an automatic storing arrangement for handling goods-supporting elements, such as pallets and trays. The inventive device comprises a carrier means with a transport means having a gripping means, which, when the carrier means is arranged adjacent to and on a level with the element, is movable into engagement with a side of the element facing the carrier means. More specifically, the gripping means is movable to a position, in which the gripping means acts to engage by hooking on to said side of the element. The side of the element can have a projection, with which the gripping means cooperates for engagement by hooking on. The inventive automatic storing arrangement comprises a shelf section with compartments which allow storage of goods-supporting elements in depth. The shelf section is further compact, which means that the free space between two vertically adjoining shelves is minimised. Moreover a free space between the element and the side edges of the shelf is not necessary. The automatic storing arrangement finally comprises a carrier means of the type described above, which thus is capable of handling the elements stored on the shelves of the shelf section. The compact design of the shelf section, of course, results in efficient utilisation of space.

It will be appreciated that the present invention is not restricted to the embodiments illustrated. Modifications and variations are thus feasible, and the scope of the invention is only defined by the appended claims.

## Claims

1. A device for handling goods-supporting elements (E) of an automatic storing arrangement, comprising
a carrier means (10) which is movable along a first horizontal axis and has a first transport means (14) for delivering goods-supporting elements (E) arranged on the carrier means (10) and for fetching goods-supporting elements (E) from a shelf (H) of said automatic storing arrangement, the elements (E) being located adjacent to the carrier means (10), by engaging the sides of the elements (E),
the first transport means (14) comprises a gripping means (18), which is movable to a position for engaging a side, facing the carrier means (10), of an element (E) adjoining the carrier means (10) when the carrier means (10) is aligned with said element (E) and is moveable into the shelf (H) towards the element (E) arranged on the shelf (H),
said engagement allowing displacement of the element (E) by moving the carrier means (10) along said horizontal axis away from the element (E),
wherein the gripping means (18) during said engagement is adapted to act to hook on to a catching means (26) on a side of the element (E), and
the first transport means (14) further comprises an endless driving line (16), which carries the gripping means (18) and passes over two parallel drive wheels (17a, 17b) which are rotatably arranged at opposite side edges (25a, 25b) of the carrier means (10),
**characterised in that**
the gripping means is in the form of a two-way hook (18) comprising a first part (19) projecting perpendicular from the driving line (16), and a second part (19), which is connected to the first part (19) and is arranged parallel with the driving line (16), said second part (20) being pivotable into engagement with said side of the element (E) by moving the gripping means (18) over one of said drive wheels (17a, 17b), and **in that**
the second part (20) is connected to the first part to form projecting engaging portions (21) on both sides of the first part (19).

2. A device as claimed in claim 1, wherein the gripping means (18) is adapted to act to hook on to a catching means (26) in the form of a projection (26) arranged on said side.

3. A device as claimed in claim 1 or 2, wherein the gripping means (18) is movable in two opposite directions which are parallel with said first horizontal axis.

4. A device as claimed in any one of the preceding claims, wherein the carrier means (10) is movable along a vertical axis.

5. A device as claimed in any one of the preceding claims, wherein the device is movable along a second horizontal axis perpendicular to the first horizontal axis.

6. A device as claimed in any one of the preceding claims, wherein the gripping means (18) in said position for engagement with an element (E) is adapted to extend essentially parallel with said first horizontal axis from a side edge (25a, 25b) of the carrier means (18).

7. A device as claimed in any one of the preceding claims, wherein the first (19) and the second (20) part are formed in one piece.

8. A device as claimed in any one of the preceding claims, further comprising a second transport means (15), which is adapted to engage the underside of the goods-supporting elements (E), the first transport means (14) and the second transport means (15) being drivable independently of each other.

9. An automatic storing arrangement for handling goods-supporting elements (E), comprising
a shelf section (24),
a device in accordance with anyone of claims 1-8,
wherein the carrier means (10) being supported by a carriage, and
wherein the carriage and the carrier means (10) being arranged in such manner that the carrier means (10) is movable to and into shelves (H) of the shelf section (24).

## Patentansprüche

1. Vorrichtung zum Handhaben von Warenträgerelementen (E) von einer automatischen Lagereinrichtung, umfassend
ein Trägermittel (10), welches entlang einer ersten horizontalen Achse bewegbar ist und ein erstes Transportmittel (14) zum Liefern von auf dem Trägermittel (10) angeordneten Warenträgerelementen (E) und zum Holen von Warenträgerelementen (E) von einer Ablage (H) der automatischen Lagereinrichtung durch Eingreifen der Seiten der Elemente (E) besitzt, wobei die Elemente (E) sich angrenzend zu dem Trägermittel (10) befinden,
wobei das erste Transportmittel (14) ein Haltemittel (18) umfasst, welches zu einer Position zum Eingreifen einer dem Trägermittel (10) zugewandten Seite eines dem Trägermittel (10) benachbarten Elementes (E) bewegbar ist, wenn das Trägermittel (10) mit dem Element (E) ausgerichtet ist und in die Ablage auf das auf der Ablage (H) angeordnete Element (E) zu bewegbar ist,
wobei der Eingriff eine Verschiebung des Elementes (E) durch Bewegen des Trägermittels (10) entlang der horizontalen Achse weg von dem Element (E) erlaubt,
worin das Haltemittel (18) während des Eingriffes angepasst ist, um Einhaken an einem Feststellmittel (26) auf einer Seite des Elementes (E) zu agieren, und das erste Transportmittel (14) außerdem eine endlose Antriebslinie (16) umfasst, welche das Haltemittel (18) trägt und über zwei parallele Antriebsräder (17, 18) führt, welche drehbar an gegenüberliegenden seitlichen Kanten (25a, 25b) des Trägermittels (10) angeordnet sind,
**dadurch gekennzeichnet dass** das Haltemittel in der Form eines Zwei-Wege-Hakens (18) besteht, der einen von der Antriebslinie (16) senkrecht vorspringenden ersten Teil (19), und einen zweiten Teil, welcher mit dem ersten Teil (19) verbunden ist und parallel mit der Antriebslinie (16) angeordnet ist, umfasst, wobei der zweite Teil (20) mit der genannten Seite des Elementes (E) in den Eingriff durch Bewegen des Haltemittels (18) über eines der Antriebsräder (17a, 17b) schwenkbar ist, und **dadurch** dass
der zweite Teil (20) mit dem ersten Teil verbunden ist, um vorspringende Eingreifabschnitte (21) auf beiden Seiten des ersten Teiles (19) zu bilden.

2. Vorrichtung gemäß Anspruch 1, worin das Haltemittel (18) angepasst ist, um zum Einhaken an einem Feststellmittel (26) in der Form eines auf der genannten Seite angeordneten Vorsprunges (26) zu agieren.

3. Vorrichtung gemäß Anspruch 1 oder 2, worin das Haltemittel (18) in zwei entgegen gesetzten Richtungen bewegbar ist, welche mit der ersten horizontalen Achse parallel sind.

4. Vorrichtung gemäß einem der vorhergehenden Ansprüche, worin das Trägermittel (10) entlang einer vertikalen Achse bewegbar ist.

5. Vorrichtung gemäß einem der vorhergehenden Ansprüche, worin die Vorrichtung entlang einer zweiten horizontalen Achse senkrecht zu der ersten horizontalen Achse bewegbar ist.

6. Vorrichtung gemäß einem der vorhergehenden Ansprüche, worin das Haltemittel (18) in der Position zum Eingriff mit einem Element (E) angepasst ist, um sich im wesentlichen parallel mit der ersten horizontalen Achse von einer seitlichen Kante (25a, 25b) des Trägermittels (18) zu erstrecken.

7. Vorrichtung gemäß einem der vorhergehenden Ansprüche, worin der erste (19) und der zweite (20) Teil in einem Stück gebildet sind.

8. Vorrichtung gemäß einem der vorhergehenden Ansprüche, die außerdem ein zweites Transportmittel (15) umfasst, welches angepasst ist, um an der Unterseite der Warenträgerelemente (E) einzugreifen, wobei das erste Transportmittel (14) und das Zweite Transportmittel (15) unabhängig voneinander antreibbar sind.

9. Automatische Lagereinrichtung zur Handhabung von Warenträgerelementen (E), die
einen Ablageabschnitt (24),
eine Vorrichtung gemäß einem der Ansprüche 1-8
umfasst, wobei das Trägermittel (10) durch einen Wagen getragen wird, und
wobei der Wagen und das Trägermittel (10) auf solche Weise angeordnet sind, dass das Trägermittel (10) zu und in Ablagen (H) des Ablageabschnitts (24) bewegbar ist.

## Revendications

1. Dispositif pour la manutention d'éléments de support de marchandise (E) d'un agencement de stockage automatique, comprenant :
des moyens de support (10) qui sont mobiles le long d'un premier axe horizontal et ont des premiers moyens de transport (14) pour délivrer les éléments de support de marchandise (E) agencés sur les moyens de support (10) et pour aller chercher les éléments de support de marchandise (E) sur une étagère (H) dudit agencement de stockage automatique, les éléments (E) étant positionnés de manière adjacente aux moyens de support (10), en mettant en prise les côtés des éléments (E),
les premiers moyens de transport (14) comprennent des moyens de préhension (18), qui sont mobiles dans une position pour mettre en prise un côté, faisant face aux moyens de support (10) d'un élément (E) attenant aux moyens de support (10) lorsque les moyens de support (10) sont alignés avec ledit élément (E) et sont mobiles dans l'étagère (H) vers l'élément (E) agencé sur l'étagère (H),
ladite mise en prise permettant le déplacement de l'élément (E) en déplaçant les moyens de support (10) le long dudit axe horizontal à distance de l'élément (E),
dans lequel les moyens de préhension (18) pendant ladite mise en prise sont adaptés pour servir à accrocher des moyens d'accrochage (26) sur un côté de l'élément (E), et
les premiers moyens de transport (14) comprennent en outre une chaîne d'entraînement sans fin (16), qui transporte les moyens de préhension (18) et passe sur deux roues d'entraînement parallèles (17a, 17b) qui sont agencées de manière rotative sur les bords latéraux opposés (25a, 25b) des moyens de support (10),
**caractérisé en ce que** :
les moyens de préhension se présentent sous la forme d'un crochet bidirectionnel (18) comprenant une première partie (19) faisant saillie perpendiculairement par rapport à la chaîne d'entraînement (16), et une seconde partie (19), qui est raccordée à la première partie (19) et est agencée parallèlement à la chaîne d'entraînement (16), ladite seconde partie (20) pouvant pivoter en mise en prise avec ledit côté de l'élément (E) en déplaçant les moyens de préhension (18) sur l'une desdites roues d'entraînement (17a, 17b), et **en ce que**:
la seconde partie (20) est raccordée à la première partie pour former des parties de mise en prise en saillie (21) des deux côtés de la première partie (19).

2. Dispositif selon la revendication 1, dans lequel des moyens de préhension (18) sont adaptés pour servir à accrocher des moyens d'accrochage (26) se présentant sous la forme d'une saillie (26) agencée sur ledit côté.

3. Dispositif selon la revendication 1 ou 2, dans lequel les moyens de préhension (18) sont mobiles dans deux directions opposées qui sont parallèles audit premier axe horizontal.

4. Dispositif selon l'une quelconque des revendications précédentes, dans lequel les moyens de support (10) sont mobiles le long d'un axe vertical.

5. Dispositif selon l'une quelconque des revendications précédentes, dans lequel le dispositif est mobile le long d'un second axe horizontal perpendiculaire au premier axe horizontal.

6. Dispositif selon l'une quelconque des revendications précédentes, dans lequel les moyens de préhension (18) dans ladite position pour la mise en prise avec un élément (E) sont adaptés pour s'étendre essentiellement parallèlement audit premier axe horizontal par rapport à un bord latéral (25a, 25b) des moyens de support (18).

7. Dispositif selon l'une quelconque des revendications précédentes, dans lequel la première (19) et la seconde (20) parties sont formées d'un seul tenant.

8. Dispositif selon l'une quelconque des revendications précédentes, comprenant en outre des seconds moyens de transport (15), qui sont adaptés pour mettre en prise la face inférieure des éléments de support de marchandise (E), les premiers moyens de transport (14) et les seconds moyens de transport (15) pouvant être entraînés indépendamment l'un de l'autre.

9. Agencement de stockage automatique pour effectuer la manutention des éléments de support de marchandise (E), comprenant:
une section d'étagère (24),
un dispositif selon l'une quelconque des revendications 1 à 8,
dans lequel les moyens de support (10) sont supportés par un chariot, et
dans lequel le chariot et les moyens de support (10) sont agencés de sorte que les moyens de support (10) sont mobiles vers et dans des étagères (H) de la section d'étagère (24).
